# EUROPEAN PATENT APPLICATION

(11) **EP 4 400 300 A1**
(43) Date of publication of application: **17.07.2024**
(21) Application number: 24151169.0
(22) Date of filing: 10.01.2024
(51) Int. Cl.: B32B 3/04, B32B 3/06, B32B 3/08, B32B 5/02, B32B 5/18, B32B 5/22, B32B 5/24, B32B 13/06, B32B 15/04, B32B 15/08, B32B 15/14, B32B 15/20, B32B 17/06, B32B 27/30, B32B 27/34

(54) **HEAT-ABSORBING POUCHES**

(30) Priority: 10.01.2023 US 202363479197 P
(71) Applicant: Solaredge Technologies Ltd., Herzeliya 4673335 (IL)
(72) Inventor: CURLAND, Sofia, 4673335 Herzeliya (IL); LANG, Joel, 4673335 Herzeliya (IL); SCHWARTZ, Yosef, 4673335 Herzeliya (IL); SHARONI, Ariel, 4673335 Herzeliya (IL); GOMBERG, Bryon Roos, 4673335 Herzeliya (IL)
(74) Representative: V.O.

(57) **Abstract**

Described herein are devices and methods for mitigating thermal runaway in electrical energy storage batteries. A pouch includes a seal and a sealed opening. Within the pouch are a porous support material (such as concrete, glass, cellulous, etc.) and a heat absorbing material (such as water, hydrogel, an organic liquid, etc.) For example, water may be a heat absorbing material and a glass framework may be used as a support material. For example, a pouch may be placed on either side of a lithium battery in a battery pack, and when the lithium battery enters thermal runaway, the heat absorbing material my change phase from a liquid to a vapor, and the vapor pressure causes the sealed opening to open, and the vapor to escape the pouch. This allows the heat to be released from the battery pack and protects the neighboring batteries from an increase in temperature.

## Description

### BACKGROUND

The field of technology relates to battery packs.

Battery packs may include battery cells, electronics, and a case. The case may include external terminals. The battery pack may include a support structure to align and retain the battery cells and electronics. The battery pack may include conductors connecting the battery cells, electronics, and external terminals. The external terminals may include power terminals and communication terminals.

Thermal runaway of a battery cell occurs when a battery cell reaches a temperature greater than a maximum safety temperature. The battery cell internal structure may be compromised and the reactions of the chemicals within the battery cell begin producing more heat, resulting in a thermal runaway as the temperature increases.

### SUMMARY

The following summary is a short summary of some of the inventive concepts for illustrative purposes only and is not an extensive overview, and is not intended to identify key or critical elements, or to limit or constrain the inventions and examples in the detailed description. One skilled in the art will recognize other novel combinations and features from the detailed description.

A pouch may be provided that includes, within the pouch, a heat absorbing material and a porous support material. Heat generated by the thermal runaway (TR) of a battery cell proximate to the pouch may be at least partially absorbed by the heat absorbing material. Absorbing the heat reduces the heat that might otherwise be transferred from the overheating battery cell to neighboring battery cells, thereby potentially inhibiting the propagation of the thermal runaway condition to neighboring battery cells. Allowing heat absorbing material to absorb the heat of the TR cell thus may result in a lower temperature of the neighboring cells. Moreover, by absorbing heat from the proximate battery cell, the heat absorbing material may reduce the opportunity for the proximate battery cell to enter thermal runaway in the first place.

The heat absorbing material may include a phase change material (PCM) that assists in absorbing the heat produced by the runaway cell. The heat absorbing material may be in a solid state and/or in a liquid state within a temperature range that is below a maximum safety temperature of a battery cell, such as at room temperature. For example, when water is used as a heat absorbing material, the water may initially be in a liquid state and will undergo a phase change to vaporize at approximately 100 degrees centigrade, thereby absorbing 2260 joules per gram of water vaporized or 2.26 kilojoules per gram (kJ/g). Similarly, where the heat absorbing material is initially a solid, heating the heat absorbing material may cause it to undergo a phase change to melt into a liquid, to vaporize into a vapor, or to sublimate directly to a gas. In either case, such a phase change may contribute to the absorption of a significant amount of heat energy. The heat absorbing material may additionally include one or more additives (for example, salts) that assist in transfer of the heat to the heat absorbing material, lower the freezing temperature of the heat absorbing material, adjust the melting or boiling temperature of the heat absorbing material, and prevent degradation of the heat absorbing material or the porous support material. For example, the heat absorbing material may comprise a salt solution that comprises 18.7 percentage by weight and the remainder water. The additives may be incorporated into one or more other solid and/or liquid materials of the heat absorbing material. For example, where the heat absorbing material includes a liquid, the additives may be particles that are dissolved in the liquid or may be suspended in the liquid.

The porous support material may include a large variety of base materials configured in a porous distribution of material, such as fibers, a foam, a sponge, or a framework. The base materials may be a gel, a glass, a concrete, a ceramic, a polymer, and/or cellulous fiber. For example, a gel is mixed with water to create a hydrogel and the hydrogel is used to absorb heat. For example, a glass foam is used as a porous support material and water with additives (antifungal, antifreeze, etc.) is a heat absorbing material. For example, a glass wool (such as Sichuan Micolon Vacuum New Material Co. product GW 166329) is used as a porous support material and water with additives (antifungal, antifreeze, etc.) is a heat absorbing material. For example, an aerated autoclaved concrete is used as a porous support material and the heat absorbing material is a liquid. For example, a foamed concrete with a density of less than 150 kilograms per meter cubed (kg/m3) is used as a porous support material. For example, an alumina foam is used as a porous support material. For example, a combination of polymer and cellulous fibers are used as a porous support material. For example, Ethylene Glycol (EG) may be used as an antifreeze additive. An example heat absorbing material may comprise 30 to 40 percent of volume of EG with the remainder water. The porous support material may be coated with a hydrophilic coating to improve wettability of the porous support material.

The porous support material and the pouch may be configured in any shapes desired. For example, where the porous support material and the pouch may be configured as a rectangular plate or rectangular sheet, so that the pouch is retained in a shape similar in size to the large face of a cuboid-shaped battery cell. The pouch may be cuboid-shaped and prepared by sandwiching together two pieces of pouch material, and sealing them together except for at one edge of the sandwiched pouch structure. The porous support material may be placed in the pouch, and the pouch may be at least partially filled with the heat absorbing material. The pouch may be sterilized (such as by Pasteurization and/or by applying ultraviolet light) and/or undergo further processing. The pouch may be sealed on the final open side to form a vent. The seal made on the final open side may be a weaker seal than the seal(s) made on the remaining portions of the pouch. For example, one edge of the cuboid pouch may have a weaker seal that forms a vent configured to open at a lower pressure than the rest of the seal(s). When the vent opens due to the heat absorbing material vaporizing from the pouch receiving sufficient heat from a battery cell undergoing thermal runaway, the vapor inside the pouch is released so that the vapor can exit the pouch, taking with it heat energy and thereby reducing the heat that would have been otherwise transferred to a battery cell from the battery cell undergoing thermal runaway. By placing the large face of the pouch adjacent to the large face of one or more battery cells, there may be good thermal conductivity between the battery cell(s) and the pouch. When heat is generated in a battery cell by a thermal runaway condition, the heat absorbing material may absorb at least some of the heat and release the heat away from the neighboring battery cells, such as by releasing the heat into the battery pack internal cavity or releasing the heat outside the battery pack using an external vent of the battery pack.

As noted above, this summary is merely a summary of some of the aspects and features described herein. It is not exhaustive, and it is not to be a limitation on the claims.

### BRIEF DESCRIPTION OF THE DRAWINGS

Certain features, aspects, and advantages of the present disclosure will become better understood with regard to the following description, claims, and drawings. The present disclosure is illustrated by way of example, and not limited by, the accompanying figures. In the drawings, like numerals reference similar elements.
FIG. 1 shows an example schematic of a heat-absorbing pouch.
FIG. 2A shows an example cross-section schematic of a heat-absorbing pouch.
FIG. 2B shows an example of a heat-absorbing pouch contents.
FIG. 2C shows an example of a heat-absorbing pouch contents.
FIG. 2D shows an example of a heat-absorbing pouch contents.
FIG. 3 shows example porous support materials.
FIG. 4 shows an example flowchart of a method for heat-absorbing pouches.
FIG. 5 shows an example flowchart of a method of manufacturing a heat-absorbing pouch.
FIG. 6 shows an example schematic of a battery pack containing heat-absorbing pouches.
FIG. 7A shows an example schematic of a heat-absorbing pouch.
FIG. 7B shows an example schematic of a heat-absorbing pouch.
FIG. 8A shows an example schematic of a heat-absorbing pouch retainer.
FIG. 8B shows an example schematic of a heat-absorbing pouch retainer.
FIG. 8C shows an example schematic of a heat-absorbing pouch retainer.

### DETAILED DESCRIPTION

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the disclosure. Accordingly, the foregoing description is by way of example only, and is not limiting.

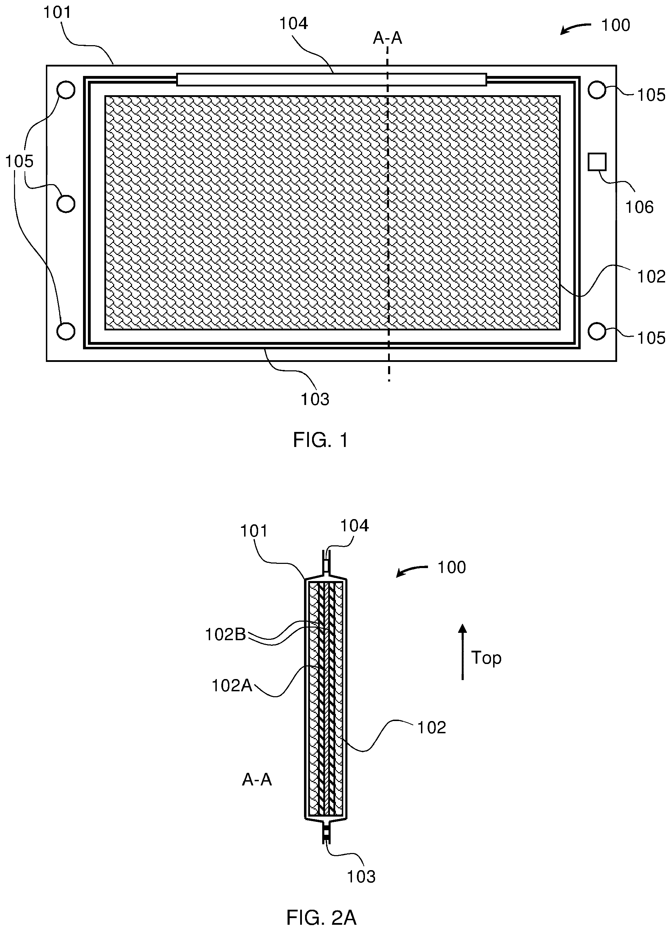

Reference is now made to FIG. 1, which shows an example schematic of a heat-absorbing pouch 100. Pouch 100 includes a laminate 101 that holds heat-absorbing and porous support materials 102 stored within the pouch 100. A seal 103 partially encapsulates the materials 102 inside the laminate 101, leaving a portion that is vented (vent 104), which is shown by way of example as being located at the topmost section of the pouch 100. In an example, the vent 104 is a separate structure that is heat molded into the laminated pouch 100. As a further example, the vent 104 is a section of the seal that is configured to open as a vent when a first pressure threshold is reached, and the rest of the seal is configured to open at a second pressure threshold is reached, wherein the second pressure threshold is at a higher pressure than the first pressure threshold. Laminate 101 may include one or more perforations 105 and 106 to assist in positioning the pouch in a structure or framework of a battery pack. To ensure correct orientation of the pouch 100 when attached to the framework so that the vent is oriented in a desired direction such as upward (away from gravity when installed in the battery pack) or toward a vent of the battery pack, one or more of the perforations (perforation 106, in this example) may of a different shape, size, and/or location. This will allow vapors to escape the pouch through the vent without losing the non-vaporized portion of the heat absorbing material still contained in the pouch 100. Once the heat absorbing material has substantially completely vaporized, the porous support material can act as a heat insulator by, for example, a chemical response to an increased temperature, such as an intumescent material, or by heat insulating properties. The laminate 101 may include one or more polymer layers, adhesive layers, or thermally conducting layers. The laminate 101 may include one or more thermally conducting additives. Line A-A in FIG. 1 indicates the location of the cross section of the pouch 100 that is illustrated in FIG. 2A.

Laminate 101 may comprise a combination of layers of aluminum, polycaprolactam (such as nylon 6), perfluoroethylene propylene copolymer, and/or hexafluoroacetone trihydrate. For example, laminate 101 may comprise 50% to 90% by weight of aluminum, such as an aluminum layer having a thickness of 20 to 200 micrometers. For example, laminate 101 may comprise an aluminum layer greater than 40 micrometers to configure the laminate 101 as a heatsink to transfer heat from an adjacent battery outside the pouch to the heat absorbing material 102. For example, laminate 101 may comprise 3% to 33% by weight of polycaprolactam (such as poly(imino(1-oxo-1,6-hexa nediyl))). For example, laminate 101 may comprise 1% to 14% by weight of perfluoroethylene propylene copolymer (such as tetrafluoroethylene-hexafluoropropylene copolymer). For example, laminate 101 may comprise 0.5% to 8% by weight of hexafluoroacetone trihydrate (such as hexafluoro-2-propanone trihydrate).

Reference is now made to FIG. 2A, which shows an example cross-section A-A schematic of a heat-absorbing pouch 100 of FIG. 1. As discussed above, the pouch 100 may include the laminate 101, as well as the heat-absorbing and porous support material 102. For example, a heat-absorbing liquid, such as water, is impregnated within a porous support material, together referenced as 102. The porous support material may include a heat insulating layer 102B and/or a heat conducting layer 102A. The heat conducting layer 102A may allow heat to conduct at a higher rate than the heat insulating layer 102B. The seal 103 may enclose materials 102,102A, and 102B in laminate 101, and the vent 104 (e.g., on the top side of the pouch 100) may be configured to release vapor from the pouch 100 when the first pressure threshold is reached. The laminate may include a heat conducting layer, such as a layer of aluminum foil embedded in the laminate, where the aluminum foil is configured to conduct the heat from a neighboring battery cell to the heat absorbing material. Seal 103 may be configured to open at the second pressure threshold, which as discussed above may be larger than the first pressure threshold.

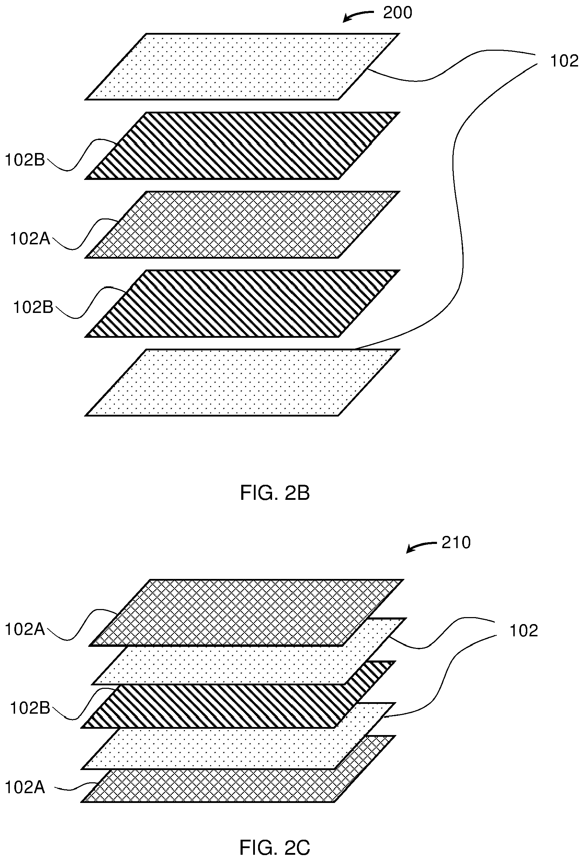

Reference is now made to FIG. 2B, which shows an example of a heat-absorbing pouch contents200, which may include element 102 discussed above with respect to FIGs. 1 and 2A. The heat-absorbing pouch contents 200 may include a porous support material impregnated with a heat absorbing material, together referred to as 102. The heat conducting layer 102A may be included in the pouch 100. The heat conducting layer 102A is configured to act as a heat sink, with one portion of the layer 102A in thermal contact with the heat absorbing material and the layer 102A may be configured to receive heat from a neighboring battery cell (not shown). For example, if the heat absorbing material is a water-based mixture, and the battery cell increases temperature above approximately 100 degrees centigrade (degC) (or other vaporization point of the water-based mixture, which may be modified with one or more additives such as one or more salts), the water of the water-based mixture will start to vaporize and leave the pouch 100 via the vent 104. Any remaining water will pool towards the bottom of the pouch 100 (if the pouch 100 is oriented with the vent 104 directed up) and the heat conducting layer 102A will thus always be in contact with the remaining pool of water on the bottom of the pouch. The heat conducting layer 102A will remain at or near the boiling temperature of the heat absorbing material and help absorb the heat from the battery cell with the high temperature, such as a battery cell beginning thermal runaway. The heat insulating material 102B is configured to insulate the heat transfer between battery cells on either side of the heat absorbing pouch when all the heat absorbing material in 102 has been depleted.

Reference is now made to FIG. 2C, which shows an example of a heat-absorbing pouch contents 210, which may include element 102 discussed above with respect to FIGs. 1 and 2A. The heat-absorbing pouch contents 210 may include a porous support material impregnated with a heat absorbing material, together referred to as 102. The heat conducting layers 102A may be included in the pouch 100, such as adjacent to the neighboring cells on either side of the pouch 100. The heat conducting layers 102A is configured to act as a heat sink, with one portion of the layer 102A in thermal contact with the heat absorbing material and the layer 102A may be configured to receive heat from a neighboring battery cell (not shown). The heat insulating material 102B is configured to insulate the heat transfer between battery cells on either side of the heat absorbing pouch when all the heat absorbing material in 102 has been depleted.

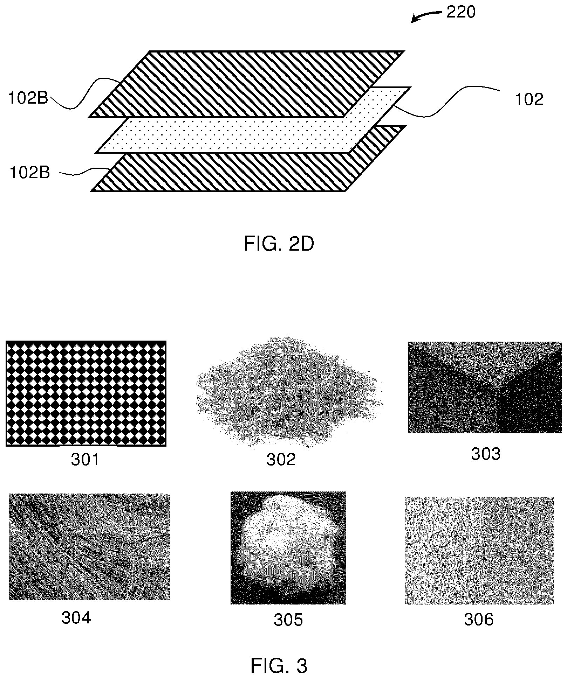

Reference is now made to FIG. 2D, which shows an example of a heat-absorbing pouch contents 220, which may include element 102 discussed above with respect to FIGs. 1 and 2A. The heat-absorbing pouch contents 220 may include a porous support material impregnated with a heat absorbing material, together referred to as 102. The heat conducting layers 102A may be included in the pouch 100, such as adjacent to the neighboring cells on either side of the pouch 100. The heat conducting layers 102A is configured to act as a heat sink, with one portion of the layer 102A in thermal contact with the heat absorbing material and the layer 102A may be configured to receive heat from a neighboring battery cell (not shown).

Reference is now made to FIG. 3, which shows example porous support materials 301, 302, 303, 304, 305, and 306 that may be part of element 102 discussed above with respect to FIGs. 1, 2A, and 2B. A porous support material may have a porosity of between 50 and 99 percent to allow the heat absorbing material to fill the pores of the porous support material. A porous support material may have a porosity greater than 80%. A porous support material may have a porosity of between 80 and 99 percent. This potentially allows the heat absorbing material to be in thermal contact with as much of the pouch sides as practical, to better absorb heat from the neighboring battery cell. To support this, the porous support material may have good wetting ability and stable structural integrity at increased temperatures, such as at temperatures above 80 degC.

Porosity may be determined as the volume of pores in a sample of material divided by the total volume of the sample of material, and may be expressed as a percentage. Porosity of a sample of material (e.g., the porous support material) may be measured by, for example, any one or more of the following procedures:
- optically determining the area of the porous support material versus the area of the pores visible under a microscope and computing the areal and volumetric porosity,
- using industrial computed tomography imaging to create a three-dimensional representation of the porous support material, including pores,
- immersion of a porous support material sample, under vacuum, in a fluid that preferentially wets the pores (imbibition), and comparing the volume of the fluid before and after the immersion,
- fluid saturation method (where pore volume is equal to the total volume of fluid (e.g., water) minus the volume of fluid left after soaking the sample), and/or
- water evaporation method (saturate sample with a fluid (e.g., water) while measuring sample weight while it is saturated and comparing with the sample weight after the fluid has evaporated; the weight difference can be used to compute the pore volume).

A porous support material may have a thermal conductivity of, for example, 5 watts per meter per degree kelvin (W/m-K) or less. For example, a glass foam used as the porous support material in the pouch 100 may have a thermal conductivity between 0.038 and 0.055 W/m-K. For example, a concrete used as the porous support material in the pouch 100 may have a thermal conductivity between 1.6 to 3.2 W/m-K. Such a relatively low thermal conductivity of the porous support material may allow the porous support material to act as a thermal insulator when the heat absorbing material can no longer absorb heat, such when a water-based heat absorbing material has been vaporized or otherwise depleted. Thermal conductivity of the porous support material may be measured, for example, as detailed in ISO 22007-2:2015. Density of the porous support material may be measured, for example, by weighing a sample of known volume, and dividing the weight of the sample by the volume of the sample.

The porous support material may include a perforated sheet or film 301. Such a sheets or film 301 may be made of high temperature materials, such as glass, ceramic, and/or minerals, and may be perforated to at least 70% by area. Thus, when multiple such sheets or films are stacked the resulting structure would have a porosity of at least 80%. The porous support material may include cellulous fiber 302, such as sawdust, pulp, wood pulp, fluff pulp, and/or the like. The cellulous fiber 302 may be processed to remove volatile chemicals that may produce an exothermic reaction at elevated temperatures, such as above 80 degC. The porous support material may include glass foam 303. The glass foam may have an open cell structure and porosity of between 80 and 99 percent. The porous support material may include plant fiber 304. For example, agricultural byproducts are processed to remove volatile materials and those processed byproducts may be used as fibers of the porous support material inside the heat-absorbing pouch 100. For example, corn husks, hemp, tree bark, or bamboo are processed and may be used to produce the porous support material. The porous support material may not burn well when heated, such as when the porous support material lacks volatile or exothermic chemicals. The porous support material may become thermally insulating at a high temperature, such as at a temperature of 150 degC or higher. For example, the porous support material carbonizes at 200 degC. For example, the porous support material is an intumescent material that is activated between 150 and 400 degC. The porous support material may include cotton fiber 305. The porous support material may include aerated autoclaved concrete (AAC) and/or foamed ultralight concrete (UC) 306. For example, "green" AAC or UC may be used as the porous structural material, where "green" means not fully processed. For example, AAC or UC that has not undergone final heating may be used as the porous structural material. A porous support material may include a combination of materials. For example, a porous support material may include a combination of fluff pulp, bi-component fibers (such as polyethylene or polypropylene), superabsorbent polymer (such as a cross-linked and partly neutralized polyacrylic acid), and/or a polymer dispersion (such as a vinyl acetate ethylene copolymer).

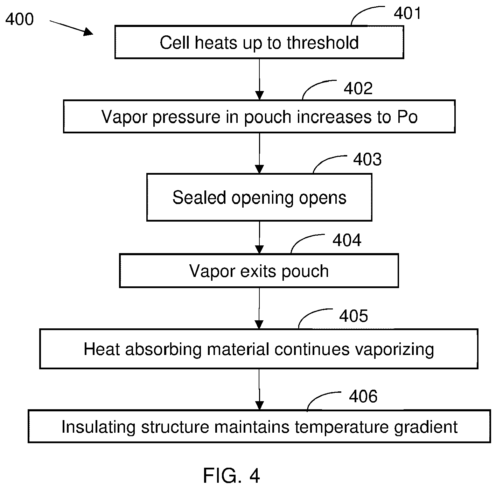

Reference is now made to FIG. 4, which shows an example flowchart 400 of a method of operation of a heat-absorbing pouch such as pouch 100, or such as pouch 700 or pouch 710 as described below. At step 401, a temperature of a battery cell proximate to the pouch increases above a threshold temperature, such as a boiling or vaporization point temperature of the heat absorbing material in the pouch. The heat from the battery cell may transfer to the pouch, which may cause the heat absorbing material to undergo a phase state change, such as by boiling. At step 402, the vapor pressure in the pouch increases as a result of the boiling of the heat absorbing material, up to a pressure threshold Po. At step 403, the pressure increasing above Po causes the seal in the vent (e.g., vent 104) to break, tear, or otherwise fail, resulting in the vent of the pouch opening. At step 404, the vapor inside the pouch is released into the battery case as a natural result of the pressure differential between the inside of the pouch and the environment of the battery case. At step 405, the heat absorbing material continues to vaporize, thereby absorbing a substantial amount of the heat of the hot battery cell. For example, if the heat absorbing material is a water-based mixture, the vaporization above 100 degC (or other boiling point of the water-based mixture) will result in steam leaving the pouch via the vent. The porous support structure may help to thermally connect the heat absorbing material with the hot battery cell, such as by assisting the wetting of the pouch adjacent to the hot battery cell, to assist with efficient heat transfer from the battery cell to the interior of the pouch. When the heat absorbing material has substantially fully vaporized, the porous support structure, which remains in the pouch, may act as an insulator (step 406) to help slow down further heat transfer through the pouch to neighboring batter cells, thereby maintaining for a long period of time a temperature gradient between the hot battery cell and the neighboring battery cells.

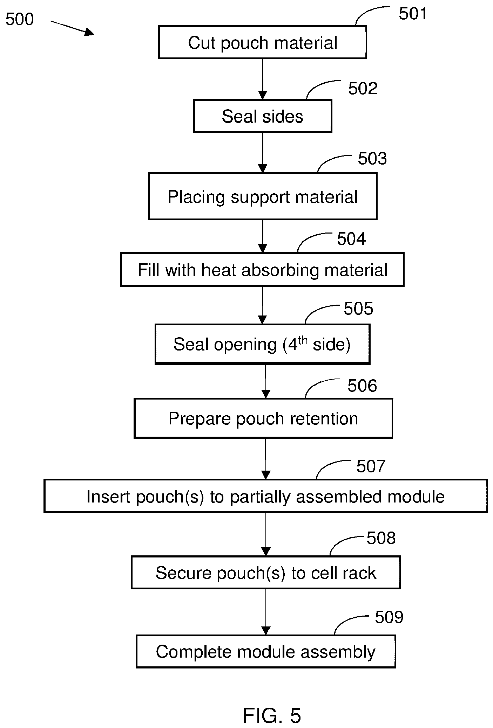

Reference is now made to FIG. 5, which shows an example flowchart 500 of a method of manufacturing a heat-absorbing pouch such as pouch 100, or such as pouch 700 or pouch 710 as described below. At step 501, a pouch material, such as a laminate of polymer, adhesive, and/or metal layers, is cut into one or more pieces shaped to form the pouch. The cut pieces may be, for example, two rectangles each the size of the pouch, or a single rectangle with double the size of the pouch and folded over in half. Rectangular shapes are discussed herein only by way of example. The pouch material may be cut into any desired shapes and into any number of pieces, including rounded shapes, to form the pouch. At step 502, the pouch is sealed on all sides but one, which is left as an opening. Alternatively, more than one region of the pouch may be left unsealed at this point, such as if more than one vent in the pouch is desired. At step 503, the porous support material is placed in the pouch, and at step 504 the heat absorbing material is filled into the pouch. When filled into the pouch at step 504, the heat absorbing material may be at a temperature at which the heat absorbing material is in a liquid phase. At step 505, the opening(s) is now sealed or closed to provide a vent(s) for releasing the vapor from the heat absorbing material.

As an example, if the pouch may be cuboid-shaped, the first, second, and third sides of the pouch may be sealed per step 502, and the opening at the fourth side may be sealed or closed per step 505. When the pouch is sufficiently heated, the seal on the fourth side may open to vent the vapor previously formed in the pouch.

The seal formed per step 505 (e.g., on the fourth side of the pouch) may include (e.g., be formed around) a structural device that acts as a vent, such as a pressure relief valve. For example, the pouch is sealed at step 505 with a thermal welding configured to open at a vapor pressure Po that is a lower pressure than that needed to open the seal of the pouch produced in step 502. For example, the pouch is sealed at step 505 with a vent incorporated by adhesive or thermal welding into the fourth side opening. The final seal (such as on the fourth side of a cuboid pouch) may be configured to leave some slack in the pouch, so the pouch is configured to deform when one or more neighboring battery cell is swelling (such as normal swelling during the lifecycle of the battery cells). The slack in the pouch laminate will allow the pouch to remain in good thermal contact with the battery cells adjacent to it. Each of the pouches adjacent to the end battery cells in a battery pack may have a rigid plate on the side of the pouch opposite the side the of the pouch that is adjacent a battery cell. At step 506, the pouch may be prepared for retention in the battery pack, such as preparing a pouch retainer structure such as perforations and/or a frame around the pouch. A frame may be molded to the pouch. A Frame may comprise two parts that snap around pouch. The pouch may have holes to help align and secure the molded or snapped-on frame. For example, the pouch is perforated at the edges outside of the thermal welded area with one or more perforations (e.g., perforations 105 and 106). For example, the perforations are asymmetrical and configured to match similarly asymmetrical protrusions on a support frame of the battery pack. For example, a support frame of the battery pack has one or more protrusions, corresponding in shape, size, and location to the one or more perforations, that snap onto the pouch through the perforations. For example, a support frame of the battery pack is overmolded onto the pouch to thereby retain the pouch. At step 507, the pouch is inserted into a partially assembled battery pack structure, for example the pouch is inserted into a slot of the battery pack structure configured to receive and retain the pouch. For example, a frame connected to the periphery of the pouch is inserted into a receptacle of the battery pack that supports multiple such frames with multiple such pouches and maintains the pouches to be in contact with or otherwise proximate to battery cells that are retained in in a cell rack or framework of the battery pack. At step 508, the pouch is secured to the cell rack or framework by such as using a latching mechanism, a tightening mechanism, and/or an adhesive.

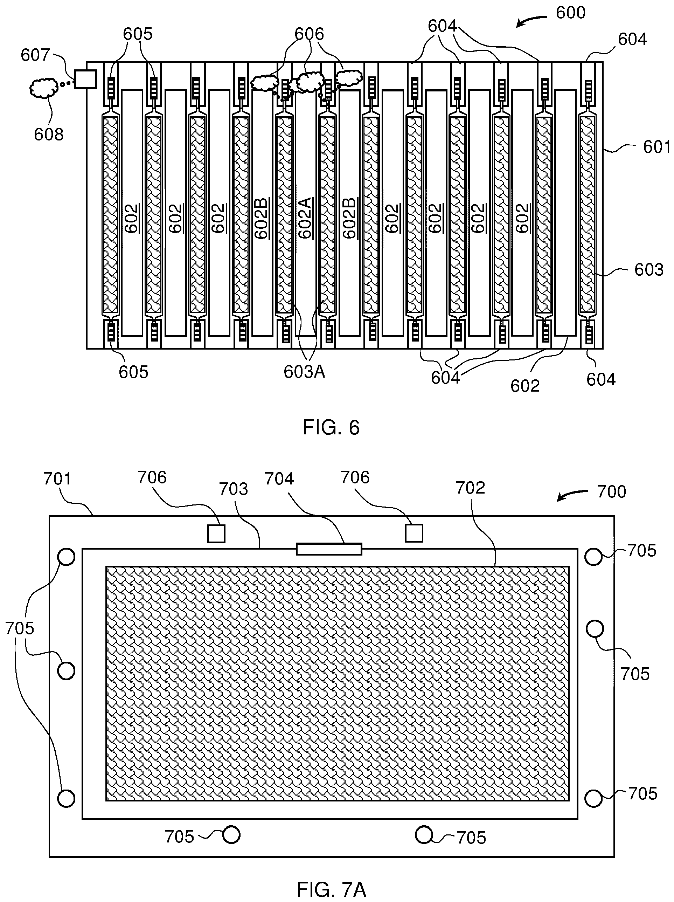

Reference is now made to FIG. 6, which shows an example schematic of a battery pack 600 containing heat-absorbing pouches 603. Each of the pouches 603 may be, for example, the pouch 100 of FIGs. 1 and 2A. Battery pack 600 includes a case 601, a plurality of battery cells 602, a support frame or rack 604, and a plurality of heat-absorbing pouches 603. Battery cells 602 and heat-absorbing pouches 603 may be alternated along a dimension of the battery pack 600, with each cell 602 having one pouch 603 on either side of the cell 602. Electrical busbars (not shown) may connect between the battery cells and external terminals (not shown) of the battery pack 600. A plurality of retaining frames 605 may hold respective subsets of the pouches 603 and retain those pouches 603 in appropriate positions with respect to the battery pack frame or rack 604. Each retaining frame 604 may include latches to secure each pouch in each respective location, and/or sliding mechanisms for inserting the pouches 603 between the battery cells 602. Similar elements (not shown) may be used to locate and secure the battery cells 602 in the pack frame or rack 604.

When a temperature of a battery cell 602, such as battery cell 602A, increases above the boiling point of the heat absorbing material in the pouches, vapor may be generated inside the pouches 603A adjacent to the battery cell 602A. Once the vapor pressure increases above the vent release threshold pressure, the vapor 606 from each of the pouches 603A may be released into the internal space of the battery pack housing 601 and in a direction away from the battery cells 602A, 602B to reduce the possibility of the battery cells reabsorbing the released heat. In the battery pack housing 601, the pressure may also increase until a second pressure threshold of a battery pack case vent 607 is reached, and upon reaching that second pressure threshold, vapor 608 inside the battery pack housing 601 is released outside the battery pack housing 601 via the battery pack case vent 607. Even after the vapor 606 is released from the adjacent pouches 603A, the adjacent pouches 603A will continue absorb heat generated by battery cell 602A, thereby potentially preventing the other adjacent battery cells 602B from increasing too much in temperature, and thereby potentially preventing a thermal runaway condition from propagating from battery cell 602A to battery cells 602B.

Reference is now made to FIG. 7A, which shows an example schematic of a heat-absorbing pouch 700. Pouch 700 may be considered an example implementation of pouch 100 described above. Pouch 700 may include a laminated film shell 701 that encloses heat absorbing and porous support materials, referred to together as materials 702. A seal 703 encapsulates the materials 702 within the shell 701, and a section of the seal 703 includes a vent 704 that is configured to release pressure from inside the pouch 700 when the pressure within the pouch 700 is above a pressure threshold of the vent 704. Perforations 705 and 706 in the edges of the pouch outside the sealed pouch area may allow aligning the pouch 700 in a frame or support structure of a battery module. The perforations may have different asymmetrical locations as in perforations 705, and different perforation shapes as in perforation 706. Pouch 700 may enclose the same materials 102 and 102A as described above with respect to pouch 100.

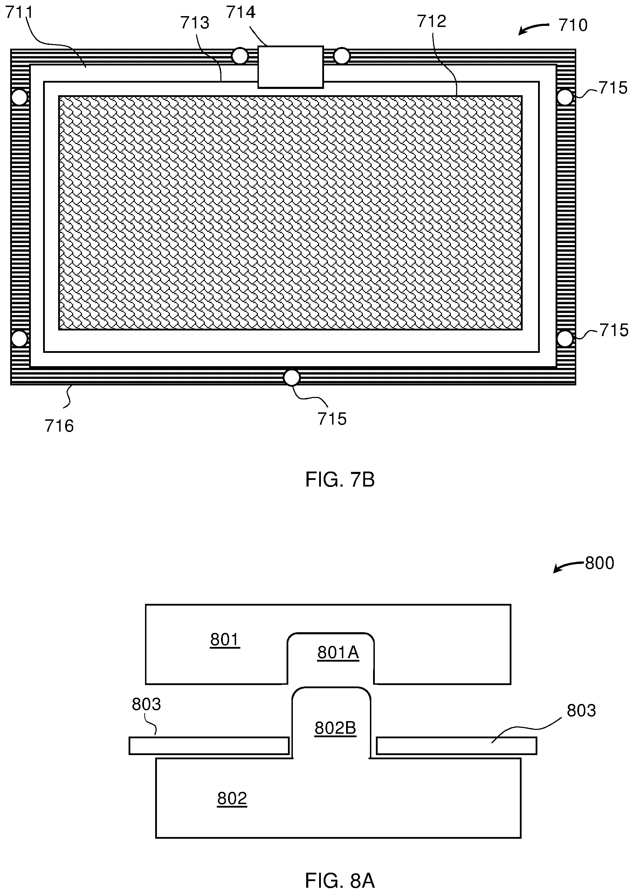

Reference is now made to FIG. 7B, which shows an example schematic of a heat-absorbing pouch 710. Pouch 710 may be considered an example implementation of pouch 100 described above. Pouch 710 may include a laminated film shell 711 that encloses heat absorbing and porous support materials, referred to together as materials 712. A seal 713 encapsulates the materials 712 within the shell 711, and a section of the seal 713 includes a vent 714 that is configured to release pressure from inside the pouch 710 when the pressure within the pouch 710 is above a pressure threshold of the vent 714. A pouch frame 716 may surround the pouch, and the pouch frame may be configured to allow aligning the pouch 710 in a support structure of a battery module. Indentations or protrusions 715 may also help align and secure the pouch 710 to the battery pack structure and retain the pouch in between the battery cells during heat absorption of the pouch 710. Pouch 710 may enclose the same materials 102 and 102A as described above with respect to pouch 100.

Reference is now made to FIG. 8A, which shows an example schematic of a heat-absorbing pouch retainer 800. Pouch retainer 800 may be configured to hold a heat-absorbing pouch, such as any of pouches 100, 700, or 710. Pouch retainer 800 may include two parts of a frame, part 801 and part 802, where part 801 includes a recess 801A and part 802 includes a corresponding protuberance 802B having a substantially inverse profile as recess 801A such that recess 801A is configured to receive protuberance 802B. For example, protuberance 802B is configured to snap into recess 801A, thereby securing pouch 803 between the two parts 801 and 802, and thus securing the pouch to the battery pack support structure. Pouch retainer 800 may be an implementation of a pouch retainer structure as described above with respect to step 506 of flowchart 500.

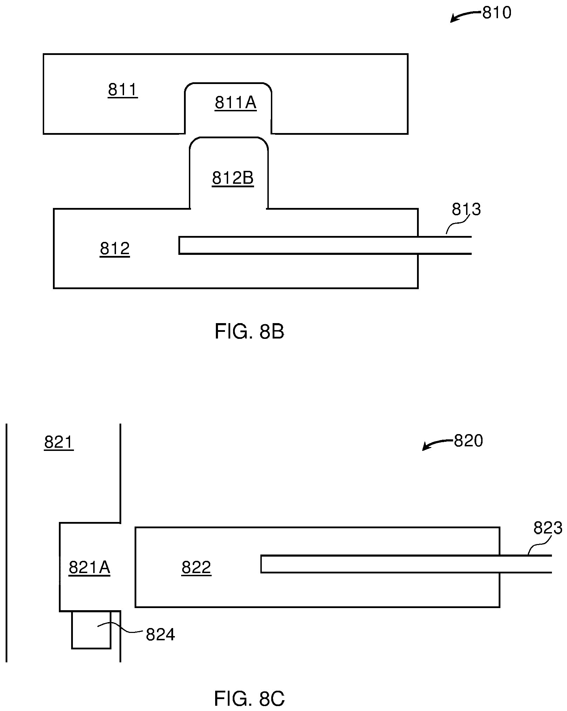

Reference is now made to FIG. 8B, which shows an example schematic of a heat-absorbing pouch retainer 810. A pouch 813 may be embedded in a frame 812, where frame 812 includes a protuberance 812B. Battery pack support structure 811 may include a recess 811A that is configured to received protuberance 812B, such as a snap in place type mating between protuberance 812B and recess 811A. Pouch 813 may be any heat-absorbing pouch, such as any of pouches 100, 700, or 710. Pouch retainer 812 may be an implementation of a pouch retainer structure as described above with respect to step 506 of flowchart 500.

Reference is now made to FIG. 8C, which shows an example schematic of a heat-absorbing pouch retainer 820. Pouch 823 may include a frame 822 at least partially surrounding the pouch 823. An edge of frame 822 is configured to slide into a corresponding recess 821A of a support structure 821 of the battery pack (such as previously disclosed sliding mechanism). A latch 824 may be used to secure frame 822 in recess 821A. Pouch 823 may be any heat-absorbing pouch, such as any of pouches 100, 700, or 710. Pouch retainer 820 may be an implementation of a pouch retention as described above with respect to step 506 of flowchart 500.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

Further, technical features are disclosed in the following embodiments of apparatuses, methods, and systems:
Embodiment 1. An apparatus comprising:
   a pouch, wherein the pouch comprises a seal;
   a porous support material; and
   a heat absorbing material,
   wherein the porous support material and heat absorbing material are inside the pouch.
Embodiment 2. The apparatus of embodiment 1, wherein the porous support material comprises a porosity of at least 80%.
Embodiment 3. The apparatus of any of the previous embodiments, wherein the porous support material comprises a thermal conductivity of at most 5 watts per meter per degree kelvin (W/m-K).
Embodiment 4. The apparatus of any of the previous embodiments, wherein the seal comprises an opening part and a fixed part, and wherein the opening part is configured to open at a pressure lower than the fixed part.
Embodiment 5. The apparatus of any of the previous embodiments, wherein the seal comprises a vent, and wherein the vent is configured to open at a pressure lower than the seal.
Embodiment 6. The apparatus of any of the previous embodiments, wherein the heat absorbing material comprises water.
Embodiment 7. The apparatus of any of the previous embodiments, wherein the heat absorbing material comprises a boiling temperature between 60 degrees Celsius (°C) and 150 degrees °C.
Embodiment 8. The apparatus of any of the previous embodiments, wherein the heat absorbing material comprises a melting temperature between -10 degrees °C and 80 degrees °C.
Embodiment 9. The apparatus of any of the previous embodiments, wherein at least 20% of the heat absorbing material at least partially fills pores of the porous support material.
Embodiment 10. The apparatus of any of the previous embodiments, wherein the heat absorbing material comprises at least one of water, hydrogel, a polymer additive, a salt additive, or an antifreeze additive.
Embodiment 11. The apparatus of any of the previous embodiments, wherein the porous support material comprises one or both of a perforated glass film or a perforated glass sheet.
Embodiment 12. The apparatus of any of the previous embodiments, wherein the porous support material comprises glass foam.
Embodiment 13. The apparatus of any of the previous embodiments, wherein the porous support material comprises aerated autoclaved concrete.
Embodiment 14. The apparatus of any of the previous embodiments, wherein the porous support material comprises concrete with a density less than 150 kilogram per meter cubed (Kg/m³).
Embodiment 15. The apparatus of any of the previous embodiments, wherein the porous support material comprises fibers.
Embodiment 16. The apparatus of any of the previous embodiments, wherein the porous support material comprises cellulose.
Embodiment 17. The apparatus of embodiment 16, wherein the cellulose comprises at least one of cotton, sawdust, or plant fiber.
Embodiment 18. The apparatus of any of the previous embodiments, wherein the porous support material comprises a polymer layer.
Embodiment 19. The apparatus of embodiment 18, wherein the polymer layer is embedded within the porous support material.
Embodiment 20. The apparatus of embodiment 18, wherein the polymer layer is substantially flat.
Embodiment 21. The apparatus of embodiment 18, wherein the polymer layer comprises gaps.
Embodiment 22. The apparatus of embodiment 18, wherein the polymer layer comprises perforations.
Embodiment 23. The apparatus of any of the previous embodiments, wherein the pouch is cuboid-shaped and comprises a short dimension and a large surface, wherein the short dimension is normal to the large surface.
Embodiment 24. The apparatus of embodiment 23, wherein the polymer layer extends inside the pouch across at least 80% of the large surface.
Embodiment 25. The apparatus of any of the previous embodiments, further comprising a sterilizing additive.
Embodiment 26. The apparatus of any of the previous embodiments, further comprising a retaining element, wherein the retaining element comprises a plurality of holes at the edges of the pouch.
Embodiment 27. The apparatus of any of the previous embodiments, further comprising a retaining element, wherein the retaining element comprises an overmolded frame surrounding the pouch.
Embodiment 28. The apparatus of embodiment 26, wherein at least one hole of the plurality of holes comprises a position or shape that is different from the other holes of the plurality of holes.
Embodiment 29. The apparatus of embodiment 27, wherein the overmolded frame is asymmetrical in shape or size.
Embodiment 30. The apparatus of embodiment 26, further comprising a battery pack support structure comprising a plurality of protuberances configured to align with the plurality of holes.
Embodiment 31. The apparatus of embodiment 27, further comprising a battery pack support structure comprising a track corresponding to the overmolded frame.
Embodiment 32. A method comprising:
   receiving, by a heat absorbing pouch comprising a heat absorbing material and a porous support material, heat from a first battery cell, wherein the heat absorbing pouch is configured to absorb the heat from the first battery cell and to insulate a second battery cell from the heat;
   vaporizing, using the heat from the first battery cell, the heat absorbing material to increase a pressure of a vapor inside the pouch;
   opening at least a portion of a vent of the heat absorbing pouch using the pressure of the vapor; and
   releasing the vapor of the heat absorbing material from the heat absorbing pouch.
Embodiment 33. The method of embodiment 32, wherein the porous support material comprises a porosity of at least 80%.
Embodiment 34. The method of embodiment 32, wherein the porous support material comprises a porosity of between 80% and 99%.
Embodiment 35. The method of any of embodiments 32-34, wherein the porous support material comprises a thermal conductivity of at most 5 watts per meter per degree kelvin (W/m-K).
Embodiment 36. The method of any of embodiments 32-35, wherein the seal comprises an opening part and a fixed part, and wherein the opening part is configured to open at a pressure lower than the fixed part.
Embodiment 37. The method of any of embodiments 32-36, wherein the seal comprises a vent, and wherein the vent is configured to open at a pressure lower than the seal.
Embodiment 38. The method of any of embodiments 32-37, wherein the heat absorbing material comprises water.
Embodiment 39. The method of any of embodiments 32-38, wherein the vapor is released in a direction away from the first battery cell.
Embodiment 40. The method of any of embodiments 32-39, wherein the heat absorbing material comprises a boiling temperature between 60 degrees Celsius (°C) and 150 degrees °C.
Embodiment 41. The method of any of embodiments 32-40, wherein the heat absorbing material comprises a melting temperature between -10 degrees °C and 80 degrees °C.
Embodiment 42. The method of any of embodiments 32-41, wherein the heat absorbing material comprises at least one of water, hydrogel, a polymer additive, a salt additive, or an antifreeze additive.
Embodiment 43. The method of any of embodiments 32-42, wherein the porous support material comprises one or both of a perforated glass film or a perforated glass sheet.
Embodiment 44. The method of any of embodiments 32-43, wherein the porous support material comprises glass foam.
Embodiment 45. The method of any of embodiments 32-44, wherein the porous support material comprises aerated autoclaved concrete.
Embodiment 46. The method of any of embodiments 32-45, wherein the porous support material comprises concrete with a density less than 150 Kg/m³.
Embodiment 47. The method of any of embodiments 32-46, wherein the porous support material comprises fibers.
Embodiment 48. The method of any of embodiments 32-47, wherein the porous support material comprises cellulose.
Embodiment 49. The method of embodiment 48, wherein the cellulose comprises at least one of cotton, sawdust, or plant fiber.
Embodiment 50. The method of any of embodiments 32-49, wherein the porous support material comprises a polymer layer.
Embodiment 51. The method of embodiment 50, wherein the polymer layer is embedded within the porous support material.
Embodiment 52. The method of embodiment 50 or embodiment 51, wherein the polymer layer is substantially flat.
Embodiment 53. The method of any of embodiments 50-52, wherein the polymer layer comprises gaps.
Embodiment 54. The method of any of embodiments 50-53, wherein the polymer layer comprises perforations.
Embodiment 55. The method of any of embodiments 32-54, wherein the pouch comprises a short dimension and a large surface, wherein the short dimension is normal to the large surface,
Embodiment 56. The method of embodiment 55, wherein the polymer layer extends across at least 80% of the large surface, and wherein the polymer layer extends normal to the short dimension.
Embodiment 57. The method of any of embodiments 32-56, wherein the heat absorbing material further comprises a sterilizing additive.
Embodiment 58. The method of any of embodiments 32-57, wherein the pouch comprises a retaining element, wherein the retaining element comprises a plurality of holes at the edges of the pouch.
Embodiment 59. The method of embodiment 58, wherein at least one hole of the plurality of holes comprises a position or shape that is different from the other holes of the plurality of holes.
Embodiment 60. The method of embodiment 58 or embodiment 59, further comprising retaining the pouches in a battery pack support structure comprising a plurality of protuberances configured to align with the plurality of holes.
Embodiment 61. The method of any of embodiments 32-60, wherein the pouch further comprises a retaining element, wherein the retaining element comprises an overmolded frame surrounding the pouch.
Embodiment 62. The method of embodiment 61, wherein the overmolded frame is asymmetrical in shape or size.
Embodiment 63. The method of embodiment 61 or embodiment 62, further comprising retaining the pouches in a battery pack support structure comprising a track corresponding to the overmolded frame.
Embodiment 64. A method of manufacturing an apparatus, the method comprising:
   placing a porous support material in a pouch;
   filling the pouch with heat absorbing material; and
   sealing an opening of the pouch.
Embodiment 65. The method of manufacturing of embodiment 64, further comprising:
   preparing retaining elements on the pouch.
Embodiment 66. The method of manufacturing of embodiment 64 or embodiment 65, further comprising:
   securing the pouch to a partially assembled battery pack using the retaining elements; and
   completing the assembly of the partially assembled battery pack.
Embodiment 67. The method of manufacturing of any of embodiments 64-66, wherein the apparatus is configured to absorb heat from at least one battery cell undergoing thermal runaway.
Embodiment 68. The method of manufacturing of any of embodiments 64-67, further comprising incorporating a retaining element on the pouch, wherein the retaining element comprises a plurality of holes at edges of the pouch.
Embodiment 69. The method of manufacturing of any of embodiments 64-68, further comprising incorporating a retaining element to the pouch, wherein the retaining element comprises an overmolded frame surrounding the pouch.
Embodiment 70. The method of manufacturing of any of embodiments 64-69, further comprising sterilizing the pouch using heat at a temperature below a vaporization temperature of the heat absorbing material.
Embodiment 71. A system comprising the apparatus of any one of embodiments 1 to 31.
Embodiment 72. A system configured to perform the method of any one of embodiments 32 to 63.
Embodiment 73. A system configured to perform the method of any one of embodiments 64 to 70.

## Claims

1. An apparatus comprising:
a pouch, wherein the pouch comprises a seal;
a porous support material; and
a heat absorbing material,
wherein the porous support material and heat absorbing material are inside the pouch.

2. The apparatus of claim 1, wherein the porous support material comprises a porosity of at least 80%.

3. The apparatus of any one of claims 1 or 2, wherein the porous support material comprises a thermal conductivity of at most 5 watts per meter per degree kelvin (W/m-K).

4. The apparatus of any one of claims 1 to 3, wherein the seal comprises an opening part and a fixed part, and wherein the opening part is configured to open at a pressure lower than the fixed part.

5. The apparatus of any one of claims 1 to 4, wherein the seal comprises a vent, and wherein the vent is configured to open at a pressure lower than the seal.

6. The apparatus of any one of claims 1 to 5, wherein the heat absorbing material comprises water.

7. The apparatus of any one of claims 1 to 6, wherein the heat absorbing material comprises a boiling temperature between 60 degrees Celsius (°C) and 150 degrees °C.

8. The apparatus of any one of claims 1 to 7, wherein the heat absorbing material comprises a melting temperature between -10 degrees °C and 80 degrees °C.

9. The apparatus of any one of claims 1 to 8, wherein at least 20% of the heat absorbing material at least partially fills pores of the porous support material.

10. The apparatus of any one of claims 1 to 9, wherein the heat absorbing material comprises at least one of water, hydrogel, a polymer additive, a salt additive, or an antifreeze additive.

11. The apparatus of any one of claims 1 to 10, wherein the porous support material comprises one or both of a perforated glass film or a perforated glass sheet.

12. The apparatus of any one of claims 1 to 11, wherein the porous support material comprises glass foam.

13. The apparatus of any one of claims 1 to 12, wherein the porous support material comprises aerated autoclaved concrete.

14. The apparatus of any one of claims 1 to 13, wherein the porous support material comprises cellulose.

15. The apparatus of claim 14, wherein the cellulose comprises at least one of cotton, sawdust, or plant fiber.
